# EUROPEAN PATENT SPECIFICATION

(11) **EP 3 480 989 B1**
(45) Date of publication and mention of the grant of the patent: **09.12.2020**
(21) Application number: 17819294.4
(22) Date of filing: 29.06.2017
(51) Int. Cl.: H04W 76/10, H04L 5/00

(54) **METHOD AND DEVICE FOR DATA TRANSMISSION**
VERFAHREN UND VORRICHTUNG ZUR DATENÜBERTRAGUNG
PROCÉDÉ ET DISPOSITIF DE TRANSMISSION DE DONNÉES

(30) Priority: 30.06.2016 CN 201610512740
(43) Date of publication of application: 08.05.2019
(73) Proprietor: China Academy of Telecommunications Technology, Hai Dian District Beijing 100191 (CN)
(72) Inventor: ZHAO, Yali, Beijing 100191 (CN); WORRALL, Chandrika Kumudinie, Beijing 100191 (CN); XU, Fangli, Beijing 100191 (CN)
(74) Representative: Studio Torta S.p.A.
(86) International application number: PCT/CN2017/090746
(87) International publication number: WO 2018/001297

(56) References cited:
- CN-A- 101 931 898
- CN-A- 102 685 816
- US-A1- 2015 319 795
- US-A1- 2016 174 281
- US-B2- 9 049 588
- SAMSUNG: "Support of SIPTO and LIPA in dual connectivity", 3GPP DRAFT; R3-151546, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Beijing, P.R. China; 20150824 - 20150828 23 August 2015 (2015-08-23), XP051006710, Retrieved from the Internet: URL:http://www.3gpp.org/ftp/Meetings_3GPP_ SYNC/RAN3/Docs/ [retrieved on 2015-08-23]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP STANDARD; 36300-C40, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 5 January 2015 (2015-01-05), XP050907554, Retrieved from the Internet: URL:http://www.3gpp.org/ftp/Specs/2014-12/ Rel-12/36_series/ [retrieved on 2015-01-05]

## Description

### TECHNICAL FIELD

The present disclosure relates to the field of communication technologies, in particular to a method and a device for data transmission.

### BACKGROUND

In an LTE (Long Term Evolution) system, radio bearers only include following two types: an SRB (Signaling Radio Bearer) and a DRB (Data Radio Bearer).

High-level control information is transmitted through the SRB in an air interface, and data information is transmitted through the DRB in the air interface. In order to ensure a network and a terminal to have a consistent understanding of an SRB/DRB configuration, the network needs to configure a parameter corresponding to each of the SRB and the DRB through a RRC (Radio Resource Control) connection reconfiguration.

Main configuration parameters related to the SRB include:
srb-Identity: an identity corresponding to the SRB, for example, a number of the SRB; Rlc-Config: a RLC (Radio Link Control) layer configuration corresponding to the SRB; and
logicalChannelConfig: indicating a logical channel configuration of the SRB.

Main configuration parameters related to the DRB include:
eps-BearerIdentity: an EPS (Evolved Packet System) bearer identity corresponding to the DRB, for example, a number of an EPS bearer;
drb-Identity: a DRB identity corresponding to the DRB, for example, a number of the DRB;
pdcp-Config: a PDCP (Packet Data Convergence Protocol) layer configuration corresponding to the DRB;
rlc-Config: a RLC layer configuration corresponding to the DRB; logicalChannelIdentity: a logical channel identity corresponding to the DRB; and logicalChannelConfig: a logical channel configuration corresponding to the DRB.

### 2) Design ideas for a future mobile communication system

The future mobile communication system mainly has following three types of services:
eMBB (enhanced Mobile Broadband);
mMTC (massive Machine Type Communications); and
URLLC (Ultra-Reliable and Low Latency Communications).

An Ultra-dense networking becomes a trend in the development process of the future mobile communication system, in the case of the ultra-dense networking, centralized processing needs to be performed on part of protocol functions, such that unified control plane management of a large number of distributed processing nodes may be achieved. Therefore, a bi-layer structure including a centralized processing node and a distributed processing node is formed, where the distributed processing node is also referred as TRP (Transmission Reception Point). In terms of the centralized processing node, it may be further divided into a control plane of the centralized processing node and a user plane of the centralized processing node depending on functions.

The future mobile communication system should support various services and employ the bi-layer structure including the centralized processing node and the distributed processing node. In this case, it is required to consider that how to perform effective data transmission management to reduce system signaling overhead.

Prior art document by SAMSUNG: "Support of SIPTO and LIPA in dual connectivity", 3GPP DRAFT; R3-151546, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE" discloses E-UTRAN user plane for dual connectivity. For dual connectivity, two different user plane architectures are allowed, and different bear options can be configured with different user plane architectures. Prior art document "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)" also discloses user plane for dual connectivity.

### SUMMARY

The present invention relates to a methods for data transmission, and devices for data transmission, as defined in the appended claims, for ensuring that a future mobile communication system can perform data transmission management more effectively to reduce system signaling overhead.

In an aspect of the invention, a method for data transmission is provided and includes:
determining, by a terminal, a correspondence between bearer types and user-plane configurations;
receiving, by the terminal, bearer type indication information indicated by a network side, the bearer type indication information carrying a bearer type identifier;
determining, by the terminal, the user-plane configuration corresponding to a bearer, according to the bearer type identifier carried in the bearer type indication information and the correspondence between the bearer types and the user-plane configurations; and
performing, by the terminal, data transmission according to the determined user-plane configuration.

According to the invention, the user-plane configurations include a user-plane function configuration and/or a user plane parameter configuration or the user-plane configurations include function division manners for a user-plane function divided between a centralized processing node and a distributed processing node.

In an embodiment, the user-plane configuration corresponding to the bearer type is a configuration for a basic function and/or a basic parameter of a user plane, or the user-plane configuration corresponding to the bearer type is a set of configurations for the basic functions and/or the basic parameters of the user plane.

In an embodiment, the determining, by the terminal, the correspondence between bearer types and the user-plane configurations includes:
determining, by the terminal, the correspondence between the bearer type of the bearer and the user-plane configuration according to at least one of a service type
corresponding to the bearer or a network deployment corresponding to the bearer.

In an embodiment, the determining, by the terminal, the correspondence between bearer types and user-plane configurations includes:
determining, by the terminal, the correspondence between the bearer types and
the user-plane configurations based on pre-configuration information.

In an embodiment, the determining, the terminal, the correspondence between the bearer types and the user-plane configurations based on pre-configuration information includes:
determining, by the terminal, the correspondence between the bearer types corresponding to a terminal capability and the user-plane configurations based on the pre-configuration information.

In an embodiment, the determining, by the terminal, the correspondence between bearer types and user-plane configurations includes:
obtaining, by the terminal, the correspondence between the bearer types and the user-plane configurations in a network notification manner.

In an embodiment, the obtaining, by the terminal, the correspondence between the bearer types and the user-plane configurations in the network notification manner includes:
reporting, by the terminal, a terminal capability; and
obtaining, by the terminal, the correspondence between the bearer types corresponding to the terminal capability and the user-plane configurations in the network notification manner.

In an embodiment, the user-plane configuration corresponding to the bearer type includes one or more of: header compression, encryption, integrity protection, segmentation, concatenation, Automatic Repeat reQuest (ARQ), Hybrid Automatic Repeat reQuest (HARQ), multiplexing, a Quality of Service (QoS) parameter, a scheduling manner, a modulation manner, an encoding manner, and a multiple access manner.

In another aspect of the invention, a method for data transmission is provided, including:
determining, by a network side device, a correspondence between bearer types and user-plane configurations;
configuring, by the network side device, the bearer type corresponding to a bearer; sending, by the network side device, bearer type indication information, where a bearer type identity is carried in the bearer type indication information;
determining, by the network side device, the user-plane configuration corresponding to the bearer, according to the bearer type identity and the correspondence between the bearer types and the user-plane configurations; and performing, by the network side device, data transmission according to the determined user-plane configuration.

According to the invention, the user-plane configurations include a user-plane function configuration and/or a user plane parameter configuration or the user-plane configurations include function division manners for a user-plane function divided between a centralized processing node and a distributed processing node.

In an embodiment, the user-plane configuration corresponding to the bearer type is a configuration for a basic function and/or a basic parameter of a user plane, or the user-plane configuration corresponding to the bearer type is a set of configurations for basic functions and/or basic parameters of the user plane.

In an embodiment, the determining, by the network side device, the correspondence between bearer types and user-plane configurations includes:
determining, by the network side device, the correspondence between the bearer
types and the user-plane configurations based on pre-configuration information. In an embodiment, the method further includes: notifying, by the network side device, a terminal of the correspondence between the bearer types and the user-plane configurations in a network notification manner.

In an embodiment, the notifying, by the network side device, the terminal of the correspondence between the bearer types and the user-plane configurations in the network notification manner includes:
obtaining, by the network side device, a terminal capability reported by the terminal; and
notifying, by the network side device, the terminal of the correspondence between the bearer types corresponding to the terminal capability and the user-plane configurations in the network notification manner.

In an embodiment, the user-plane configuration corresponding to the bearer type includes one or more of: header compression, encryption, integrity protection, segmentation, concatenation, Automatic Repeat reQuest (ARQ), Hybrid Automatic Repeat reQuest (HARQ), multiplexing, a Quality of Service (QoS) parameter, a scheduling manner, a modulation manner, an encoding manner, and a multiple access manner.

In another aspect of the invention, a device for data transmission is further provided. The device includes:
a first determining module, configured to determine a correspondence between bearer types and user-plane configurations;
a receiving module, configured to receive bearer type indication information indicated by a network side, where a bearer type identifier is carried in the bearer type indication information;
a second determining module, configured to determine the user-plane configuration corresponding to a bearer to be established, according to the bearer type identifier carried in the bearer type indication information, and the correspondence between the bearer types and the user-plane configurations; and
a transmitting module, configured to perform data transmission according to the determined user-plane configuration.

According to the invention, the user-plane configurations include a user-plane function configuration and/or a user plane parameter configuration or the user-plane configurations include function division manners for a user-plane function divided between a centralized processing node and a distributed processing node.

In an embodiment, the user-plane configuration corresponding to the bearer type is a configuration for a basic function and/or a basic parameter of a user plane, or the user-plane configuration corresponding to the bearer type is a set of configurations for the basic functions and/or the basic parameters of the user plane.

In an embodiment, the first determining module is further configured to determine the correspondence between the bearer type of the bearer and the user-plane configuration according to at least one of a service type or a network deployment corresponding to the bearer.

In an embodiment, the first determining module is further configured to: determine the correspondence between the bearer types and the user-plane configurations based on pre-configuration information.

In an embodiment, the first determining module is further configured to determine the correspondence between the bearer types corresponding to a terminal capability and the user-plane configurations based on the pre-configuration information.

In an embodiment, the first determining module is further configured to obtain the correspondence between the bearer types and the user-plane configurations in a network notification manner.

In an embodiment, the first determining module is further configured to report a terminal capability, and obtain the correspondence between the bearer types corresponding to the terminal capability and the user-plane configurations in the network notification manner.

In an embodiment, the user-plane configuration corresponding to the bearer type includes one or more of: header compression, encryption, integrity protection, segmentation, concatenation, Automatic Repeat reQuest (ARQ), Hybrid Automatic Repeat reQuest (HARQ), multiplexing, a Quality of Service (QoS) parameter, a scheduling manner, a modulation manner, an encoding manner, and a multiple access manner.

In another aspect of the invention, a device for data transmission is provided, which includes:
a third determining module, configured to determine a correspondence between bearer types and user-plane configurations;
a configuration module, configured to configure the bearer type corresponding to a bearer;
a sending module, configured to send bearer type indication information, where a bearer type identity is carried in the bearer type indication information;
a fourth determining module, configured to determine the user-plane configuration corresponding to the bearer according to the bearer type identity and the correspondence between the bearer types and the user-plane configurations; and
a transmitting module, configured to perform data transmission according to the determined user-plane configuration.

According to the invention, the user-plane configurations include a user-plane function configuration and/or a user plane parameter configuration or the user-plane configurations include function division manners for a user-plane function divided between a centralized processing node and a distributed processing node.

In an embodiment, the user-plane configuration corresponding to the bearer type is a configuration for a basic function and/or a basic parameter of a user plane, or the user-plane configuration corresponding to the bearer type is a set of configurations for the basic functions and/or the basic parameters of the user plane.

In an embodiment, the third determining module is further configured to determine the correspondence between the bearer types and the user-plane configurations based on pre-configuration information.

In an embodiment, the device further includes: a notification module, configured to notify a terminal of the correspondence between the bearer types and the user-plane configurations in a network notification manner.

In an embodiment, the notification module is further configured to report a terminal capability, and obtain the correspondence between the bearer types corresponding to the terminal capability and the user-plane configurations through the network notification manner.

In an embodiment, the user-plane configuration corresponding to the bearer type includes one or more of: header compression, encryption, integrity protection, segmentation, concatenation, Automatic Repeat reQuest (ARQ), Hybrid Automatic Repeat reQuest (HARQ), multiplexing, a Quality of Service (QoS) parameter, a scheduling manner, a modulation manner, an encoding manner, and a multiple access manner.

Each of the foregoing technical solutions has the following advantages or beneficial effects. The network and the terminal perform user-plane data transmission based on a user-plane function corresponding to the bearer type, thereby ensuring that the future mobile communication system can perform data transmission management more effectively and reduce signaling overhead for configuring a bearer. Therefore, network slicing can be better supported.

### BRIEF DESCRIPTION OF THE DRAWINGS

Fig.1 is a schematic diagram of a network architecture of a future mobile communication system;
Fig.2 is a schematic diagram of user-plane protocol layer separation between a centralized processing node and a distributed processing node in a related art;
Fig.3 is a flow chart of a method for data transmission according to an embodiment of the present disclosure;
Fig.4 is a flowchart of a flow chart of a method for data transmission according to an embodiment of the present disclosure;
Fig.5 is a schematic diagram of pre-configuring bearer types and user-plane configurations corresponding to the pre-configured bearer types according to an embodiment of the present disclosure;
Fig.6 is a schematic diagram illustrating a broadcast manner for transmitting a correspondence between bearer types and user-plane configurations corresponding to the bearer types according to an embodiment of the present disclosure;
Fig.7 is a schematic diagram illustrating a signaling manner for transmitting a correspondence between bearer types and user-plane configurations corresponding to the bearer types according to an embodiment of the present disclosure;
Fig.8 is a block diagram of a device for data transmission according to an embodiment of the present disclosure;
Fig.9 is a block diagram of a device for data transmission according to an embodiment of the present disclosure;
Fig.10 is a block diagram of a device for data transmission according to an embodiment of the present disclosure; and
Fig.11 is a block diagram of a device for data transmission according to an embodiment of the present disclosure.

### DETAILED DESCRIPTION

Exemplary embodiments of the present disclosure will be described in more detail below with reference to accompanying drawings. While the exemplary embodiments of the present disclosure are shown in the drawings, however, it should be understood that, the present disclosure may be implemented in various forms and should not be limited by the embodiments set forth herein. Rather, these embodiments are provided such that the present disclosure will be more fully understood and the scope of the present disclosure can be fully conveyed to those skilled in the art.

It is known by those skilled in the art that the implementations of the present disclosure can be implemented as a system, a device, equipment, a method, or a computer program product. Thus, the embodiments of the present disclosure may be achieved in following forms: a hardware, a software (including a firmware, resident software, microcode, etc.), or a combination of the hardware and software.

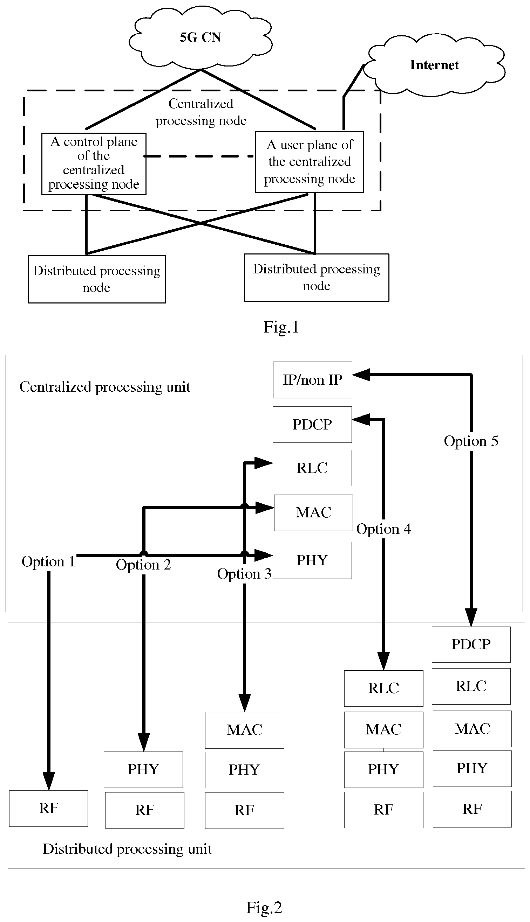

Fig.1 shows a schematic diagram of network architecture of a future mobile communication system. In a related art, for user plane processing, user-plane functions may be divided between a centralized processing node and a distributed processing node, and, at present, there are five separation schemes for a user plane protocol layer (Option 1 to Option 5), as shown in Fig.2.

According to embodiments of the present disclosure, a method and a device for data transmission are provided.

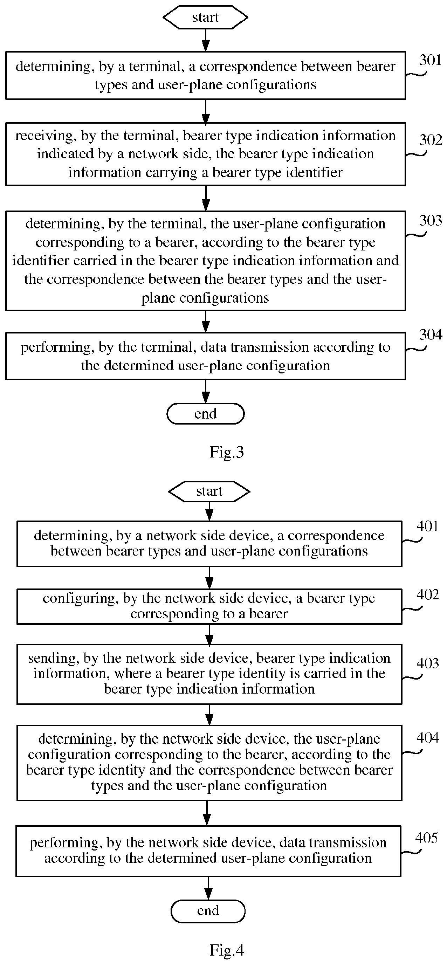

Reference is made to Fig.3, which shows a method for data transmission. The method includes step 301 to step 304.

In step 301, determining, by a terminal, a correspondence between bearer types and user-plane configurations, and going to step 302.

With respect to a function configuration and/or parameter configuration, the user-plane configurations may include: a user-plane function configuration and/or a user plane parameter configuration, which is not limited thereto, of course.

Also, with respect to a function division manner, the user-plane configurations may include function division manners for user-plane functions divided between a centralized processing node and a distributed processing node, which is not limited thereto, of course.

In the embodiment, the bearer types may correspond to service types, such as eMBB, mMTC, URLLC and the like. A user-plane configuration corresponding to the bearer type is a configuration for a basic function and/or a basic parameter of a user plane, or the user-plane configuration corresponding to the bearer type is a set of configurations for the basic functions and/or the basic parameters of the user plane, which is also not limited thereto.

It should be noted that, in a network side, a configuration may be changed through a delta (a variable) configuration on basis of the above bearer type. Taking a URLLC service as an example, since the URLLC service requires high reliability, low latency and small data packets, a user-plane function corresponding to a bearer corresponding to the URLLC service cannot support functions such as ARQ (Automatic Repeat reQuest), segmentation and the like, and a user plane parameter, such as TTI (Transmission Time Interval) should be chosen as a relatively short TTI. Taking a user-plane protocol stack separation scheme Option 3 as an example (see Fig.2), since there is a non-ideal link between the centralized processing node and the distributed processing node, a certain delay exists, and if the bearer corresponds to the URLLC service, a user-plane function corresponding to the bearer may be considered to not support segmentation and concatenation, thereby avoiding a latency caused by a scheduling interaction between the RLC and MAC (Media Access Control).

The user-plane configuration corresponding to the above bearer type includes one or more of: header compression, encryption, integrity protection, segmentation, concatenation, ARQ, Hybrid Automatic Repeat reQuest (HARQ), multiplexing, a Quality of Service (QoS) parameter, a scheduling manner, a modulation manner, an encoding manner, and a multiple access manner. It should be noted that, the one or more included by the user-plane configuration may be a set of configurations of basic functions and/or basic parameters of a user plane, which is also not limited thereto, of course.

In the embodiment, the terminal may take factors, such as a service type and network deployment corresponding to the bearer, into account, when determining the user-plane configuration corresponding to the bearer type.

In the embodiment, the terminal may determine a correspondence between the bearer types and the user-plane configurations using the following three manners.

A first optional manner: pre-configuration.

For example, a correspondence between each bearer type and a user-plane configuration corresponding to the bearer type is stipulated in a protocol.

A second optional manner: a correspondence between bearer types and user-plane configurations informed by a network through a broadcast.

For example, the network determines the user-plane configurations corresponding to the bearer types, and then notifies a terminal of a correspondence between the bearer types and the user-plane configurations through a broadcast. Specifically, a new channel and a new RNTI (Radio Network Temporary Identity) may be defined for the broadcast, or a periodic broadcast may be performed using a specific resource and a specific channel.

A third optional manner: a correspondence between bearer types and user-plane configurations informed by a network through a dedicated signaling.

For example, after a RRC connection is established between a terminal and the network, the network notifies the terminal of the correspondence between the bearer types and user-plane configurations through the dedicated signaling.

It should be noted that, manners for informing the above the bearer types and the user-plane configurations can be optimized based on a terminal capability, which is described below specifically.

If the terminal capability only supports N types of bearers, the terminal is only required to obtain user-plane configurations corresponding to the N types of bearers through the pre-configuration manner or a network notification manner.

When the terminal capability is reported, bearer type indication information of supported bearers or service type indication information of supported services needs to be carried with the terminal capability. The network may select one bearer type from the bearer types corresponding to service type indication information of the terminal according to the service type indication information of the terminal, and configure the selected bearer type to the terminal.

It should be also noted that, the above notification manner of the bearer types and the user-plane configurations may be optimized based on a bearer type actually used by the terminal, which is described below specifically.

If the correspondence between the bearer types and the user-plane configurations is informed by a broadcast or a dedicated signaling, the network may inform a user-plane configuration corresponding to a certain bearer type, when a bearer of this certain bearer type is about to be established at the terminal. Optionally, for bearers having the same type, the correspondence between bearer type and the user-plane configuration is only required to be informed once.

It should be noted that, if network slice concept is induced into a future access network, a mapping process may be performed between a bearer and a network slice, and the bearer identification information is replaced with network slice identification information. The correspondence between the bearers and the user-plane configurations is replaced with a correspondence between network switch and the user-plane configuration.

In step 302, receiving, by the terminal, bearer type indication information indicated by a network side, where the bearer type indication information carrying a bearer type identifier.

The network side may be referred to as a control plane processing unit in a network side, which is not limited thereto, of course. Optionally, after the network side configures a bearer type corresponding to a bearer to be established established according to the requirements, the network side sends the bearer type indication information to the terminal.

In step 303, determining, by the terminal, the user-plane configuration corresponding to a bearer, according to the bearer type identifier carried in the bearer type indication information and the correspondence between the bearer types and the user-plane configurations, and going to step 304.

The bearer type identifier may also be referred to as a number corresponding to the bearer type, which is not limited thereto, of course.

In step 304, performing, by the terminal, data transmission according to the determined user-plane configuration.

Taking an uplink as an example, if the user-plane function corresponding to the bearer does not include header compression, the terminal is not required to perform a header compression operation when transmitting uplink data corresponding to the bearer. In this case, a base station is not required to perform a decompression operation when receiving the uplink data, and processing manners for other user-plane configurations are similar with this, which is not repeated herein.

In the embodiment, the network and the terminal perform user plane data transmission based on the user-plane function corresponding to the bearer type. Therefore, it is ensured that the future mobile communication system can perform more effective data transmission management, signaling overhead for bearer configurations is reduced, and network slicing can be better supported.

Reference is made to Fig.4, which shows a method for data transmission is shown. The method include step 401 to step 405.

In step 401, determining, by a network side device, a correspondence between bearer types and user-plane configurations; and proceeding to step 402.

Optionally, the network side device determines the correspondence between bearer types and the user-plane configurations based on pre-configuration information, for example, the user-plane configuration corresponding to each bearer type is stipulated in a protocol.

The network side device may be a control plane processing unit in a network side, for example, corresponding to a centralized processing unit in the network architecture in Fig.2.

With respect to a function configuration and/or parameter configuration, the user-plane configurations may include: a user-plane function configuration and/or a user plane parameter configuration, which is not limited thereto, of course.

Also, with respect to a function division manner, the user-plane configurations may include function division manners for user-plane functions divided between a centralized processing node and a distributed processing node, which is not limited thereto, of course.

For example, a bearer type N corresponds to a certain division manner for dividing a user-plane function between a centralized processing node and a distributed processing node, such as option 2. Another bearer type M corresponds to a division manner for dividing a user-plane function different from the previous user-plane function between a centralized processing node and a distributed processing node.

In the embodiment, the bearer type may correspond to a service type, such as eMBB, mMTC, URLLC and the like. The user-plane configuration corresponding to the bearer type is a configuration for a basic function and/or parameter of a user plane, or a user-plane configuration corresponding to the bearer type is a set of configurations for the basic functions and/or parameters of the user plane, which is not limited thereto, of course. It should be noted that, the user-plane configuration may be changed by a network through a delta (a variable) configuration on basis of the above bearer type. Taking a URLLC service as an example, since the URLLC service requires high reliability, low latency and smaller data packets, a bearer user-plane function corresponding to the URLLC service cannot support functions such as ARQ (Automatic Repeat reQuest), segmentation and the like, and a user plane parameter, such as TTI (Transmission Time Interval) should be chosen as a shorter TTI. Taking a user plane protocol stack separation scheme Option 3 as an example (see Fig.2), since there is a non-ideal link between the centralized processing node and the distributed processing node, a certain delay exists, if a bearer corresponds to the URLLC service, a user-plane function corresponding to the bearer may be considered to not support segmentation and concatenation, thereby avoiding a latency caused by a scheduling interaction between the RLC and MAC (Media Access Control).

The user-plane configuration corresponding to the above bearer type includes one or more of: header compression, encryption, integrity protection, segmentation, concatenation, ARQ, HARQ, multiplexing, a QoS parameter, a scheduling manner, a modulation manner, an encoding manner, and a multiple access manner.

If the terminal needs to obtain the correspondence between that bearer types and the user-plane configurations by using a network notification manner, after step 401, the network side device may notify the terminal of the correspondence between that bearer types and the user-plane configurations through the network notification manner. The network notification manner may be a broadcast notification manner or a dedicated signaling notification manner. For example, the network may determine the user-plane configurations corresponding to the bearer types, and then notifies the terminal of the user-plane configuration by a broadcast. Specifically, a new channel and a new RNTI (Radio Network Temporary Identity) may be defined for the broadcast, or a periodic broadcast may be performed using a specific resource and a specific channel. For another example, after an RRC connection is established between the terminal and the network, the network notifies the terminal of the correspondence between bearer types and the user-plane configuration through a dedicated signaling.

It should be noted that, manners for informing the correspondence between bearer types and the user-plane configurations may be optimized based on a terminal capability, which is described below specifically.

If the terminal capability only supports N types of bearers, the terminal is only required to obtain user-plane configurations corresponding to the N types of bearers through the pre-configuration manner or a network notification manner.

When the terminal capability is reported, supported bearer type indication information or supported service type indication information needs to be carried with the terminal capability. The network may select one bearer type from the bearer types corresponding to service type indication information of the terminal according to the service type indication information of the terminal, and configure the selected bearer type to the terminal.

It should be also noted that, the above notification manner of the bearer types and the user-plane configurations may be optimized based on a bearer type actually used by the terminal, which is described below specifically.

If the correspondence between the bearer types and the user-plane configurations is informed by a broadcast or a dedicated signaling, the network may inform a user-plane configuration corresponding to a certain bearer type, when a bearer of this certain bearer type is about to be established at the terminal. Optionally, for bearers having the same type, the correspondence between bearer type and the user-plane configuration is only required to be informed once.

It should be noted that, if network slice concept is induced into a future access network, a mapping process may be performed between a bearer and a network slice, and bearer identification information is replaced with network slice identification information. The correspondence between the bearers and the user-plane configurations is replaced with a correspondence between network switch and the user-plane configuration.

In step 402, configuring, by the network side device, a bearer type corresponding to a bearer; and then proceeding to step 403.

Optionally, the network side device may select one bearer type from bearer types corresponding to service type indication information of the terminal according to the service type indication information of the terminal, and configure the selected bearer type to the terminal.

In step 403, sending, by the network side device, bearer type indication information, where a bearer type identity is carried in the bearer type indication information; and then proceeding to step 404.

The bearer type identifier may also be referred to as a number corresponding to the bearer type, which is not limited thereto, of course.

In step 404, determining, by the network side device, the user-plane configuration corresponding to the bearer, according to the bearer type identity and the correspondence between bearer types and the user-plane configuration; and proceeding to step 405.

In step 405, performing, by the network side device, data transmission according to the determined user-plane configuration.

Taking a downlink as an example, if the user-plane function corresponding to the bearer does not include header compression, a base station is not required to perform a header compression operation when transmitting downlink data corresponding to the bearer. In this case, a terminal is not required to perform a decompression operation when receiving the downlink data, and processing manners for other user-plane configurations are similar with this, which is not repeated herein.

In the embodiment, the network and the terminal perform user plane data transmission based on the user-plane function corresponding to the bearer type. Therefore, it is ensured that the future mobile communication system can perform data transmission management more effectively, signaling overhead for bearer configurations is reduced, and network slicing can be better supported.

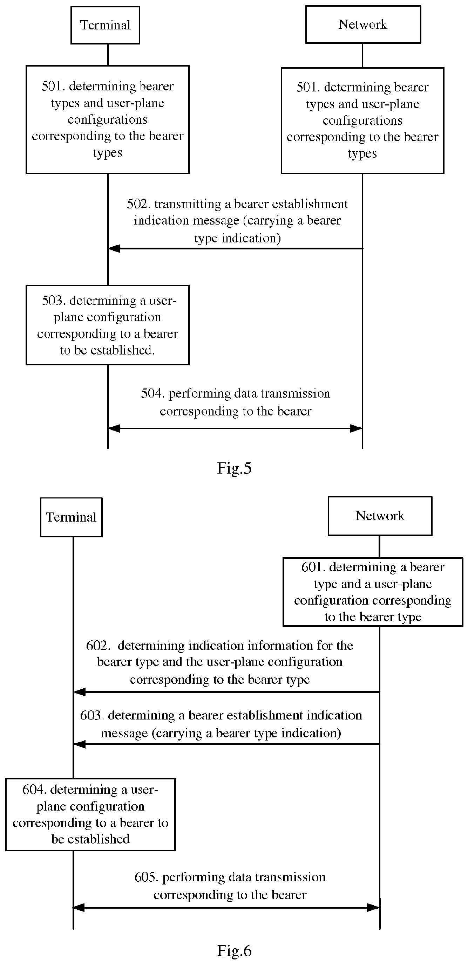

Illustratively, reference is made to Fig.5, which shows a flow chart for pre-configuring bearer types and a user-plane configuration corresponding to the bearer type is shown, of which specific steps include step 501 to step 504.

In step 501, determining bearer types and user-plane configurations corresponding to the bearer types.

A network or a terminal determines the bearer types and the user-plane configurations corresponding to the bearer types according to pre-configuration information. The pre-configuration information may be a default configuration stipulated in a protocol, or may be configuration information pre-configured in a base station and the terminal. The user-plane configuration corresponding to the bearer type includes a user-plane function configuration and/or a user plane parameter configuration. Factors, such as a service type and a network deployment corresponding to a bearer should be taken into account, when the user-plane configuration corresponding to the bearer type is determined.

The user-plane configuration corresponding to the bearer type is a configuration for a basic function and/or a parameter of a user plane, or a user-plane configuration corresponding to the bearer type is a set configurations for basic functions and/or parameters of a user plane, and the user-plane configuration may be changed by the network through a delta (a increment) configuration on basis of the above bearer type. Taking a URLLC service as an example, since the URLLC service requires high reliability, low latency and smaller data packets, a bearer user-plane function corresponding to the URLLC service cannot support functions such as ARQ segmentation and the like, and a user plane parameter corresponding to the URLLC service, such as TTI (Transmission Time Interval) should be chosen as a shorter TTI.

Taking a user plane protocol stack separation scheme Option 3 as an example (see Fig.2), since there is a non-ideal link between the centralized processing node and the distributed processing node, a certain delay exists, if a bearer corresponds to the URLLC service, a user-plane function corresponding to the bearer can be considered to not support segmentation and concatenation, thereby avoiding a latency caused by a scheduling interaction between the RLC and MAC (Media Access Control).

As an optimization, if a terminal capability only supports N types of bearers, the terminal is only required to obtain user-plane configurations corresponding to the N types of bearers through a pre-configuration manner.

In step 502, transmitting a bearer establishment indication message.

After the terminal accesses the network, the network determines whether the terminal needs to establish an uplink bearer and/ or a downlink bearer. If so, the network transmits a bearer establishment indication message to the terminal, for example, by using a RRC Connection Reconfiguration message. The bearer establishment indication message needs to carry bearer type indication information, such as, a number corresponding to a bearer type. The bearer establishment indication message may further carry an identity of a bearer and some configuration information specialized for the bearer.

The bearer establishment indication message may be a signaling for each protocol layer, such as, a RRC (Radio Resource Control) signaling, a MAC (Media Access Control) signaling, or a physical layer signaling. Of course, for the future mobile communication system, a protocol layer may change and may be no longer called a RRC/MAC/physical layer; and in this case, the bearer establishment indication message may be changed to be a signaling for a protocol layer corresponding to the further mobile communication system.

In step 503, determining a user-plane configuration corresponding to a bearer to be established.

The terminal can determine the user-plane configuration corresponding to the bearer to be established, according to the bearer type indication information obtained in step 502, and the correspondence between the bearer types and the user-plane configurations obtained in step 501.

In step 504, performing data transmission corresponding to the bearer.

Data transmission between the terminal and the network is performed according to the user-plane configuration determined in step 503. Taking a downlink as an example, if the user-plane function corresponding to the bearer does not include header compression, a base station is not required to perform a header compression operation when transmitting downlink data corresponding to the bearer. Terminal is not required to perform a decompression operation when receiving the downlink data.

In the embodiment, the network and the terminal perform user plane data transmission based on the user-plane function corresponding to the bearer type. Therefore, it is ensured that the future mobile communication system can perform data transmission management more effectively, signaling overhead for bearer configurations is reduced, and network slicing can be better supported.

Illustratively, reference is made to Fig.6, which is a schematic diagram of a broadcast manner for transmitting a correspondence between bearer types and user-plane configurations corresponding to the bearer types, which includes step 601 to step 605. In step 601, determining a bearer type and a user-plane configuration corresponding to the bearer type.

A network determines the bearer type and the user-plane configuration corresponding to the bearer type. The user-plane configuration corresponding to the bearer type includes a user-plane function configuration and/or a user plane parameter configuration. Factors, such as a service type and a network deployment corresponding to a bearer, should be taken into account, when the user-plane configuration corresponding to the bearer type is determined.

The user-plane configuration corresponding to the bearer type is a configuration for a basic function and/or parameter of a user plane, or a user-plane configuration corresponding to the bearer type is a set of configurations for basic functions and/or parameters of a user plane, and the user-plane configuration may be changed by the network through a delta configuration on basis of the above bearer type.

Taking a URLLC service as an example, since the URLLC service requires high reliability, low latency and smaller data packets, a bearer user-plane function corresponding to the URLLC service cannot support functions such as ARQ (Automatic Repeat reQuest), segmentation and the like, and a user plane parameter, such as TTI (Transmission Time Interval) should be chosen as a shorter TTI.

Taking a user plane protocol stack separation scheme Option 3 as an example (see Fig.2), since there is a non-ideal link between the centralized processing node and the distributed processing node, a certain delay exists, and if a bearer corresponds to the URLLC service, a user-plane function corresponding to the bearer may be considered to not support segmentation and concatenation, thereby avoiding a latency caused by a scheduling interaction between the RLC and MAC (Media Access Control).

In step 602, determining indication information for the bearer type and the user-plane configuration corresponding to the bearer type.

That is to say, the network determines a user-plane configuration corresponding to the bearer type, and then notifies the terminal of the user-plane configuration by a broadcast. Specifically, a new channel and a new RNTI (Radio Network Temporary Identity) may be defined for the broadcast, or a periodic broadcast may be performed using a specific resource and a specific channel.

In step 603, determining a bearer establishment indication message.

After the terminal accesses the network, the network determines whether the terminal needs to establish an uplink bearer and/ or a downlink bearer. If so, the network transmits the bearer establishment indication message to the terminal, for example, by using a RRC Connection Reconfiguration message. The bearer establishment indication message needs to carry bearer type indication information, such as, a number corresponding to a bearer type. The bearer establishment indication message may further carry an identity of a bearer and some configuration information specialized for the bearer.

The bearer establishment indication message may be a signaling for each protocol layer, such as, a RRC (Radio Resource Control) signaling, a MAC (Media Access Control) signaling, or a physical layer signaling. Of course, for the future mobile communication system, a protocol layer may change and may be no longer called a RRC/MAC/physical layer, and in this case, the bearer establishment indication message may be changed to be a signaling for a protocol layer corresponding to the further mobile communication system.

In step 604, determining a user-plane configuration corresponding to a bearer to be established.

The terminal may determine the user-plane configuration corresponding to the bearer to be established according to the bearer type indication information obtained in step 602, and the correspondence between the bearer types and the user-plane configurations obtained in step 601.

In step 605, performing data transmission corresponding to the bearer.

Data transmission between the terminal and the network is performed according to the user-plane configuration determined in step 603. Taking a downlink as an example, if the user-plane function corresponding to the bearer does not include header compression, a base station is not required to perform a header compression operation when transmitting downlink data corresponding to the bearer. Terminal is not required to perform a decompression operation when receiving the downlink data.

In the embodiment, the network and the terminal perform user plane data transmission based on the user-plane function corresponding to the bearer type. Therefore, it is ensured that the future mobile communication system can perform data transmission management more effectively, signaling overhead for bearer configurations is reduced, and network slicing can be better supported.

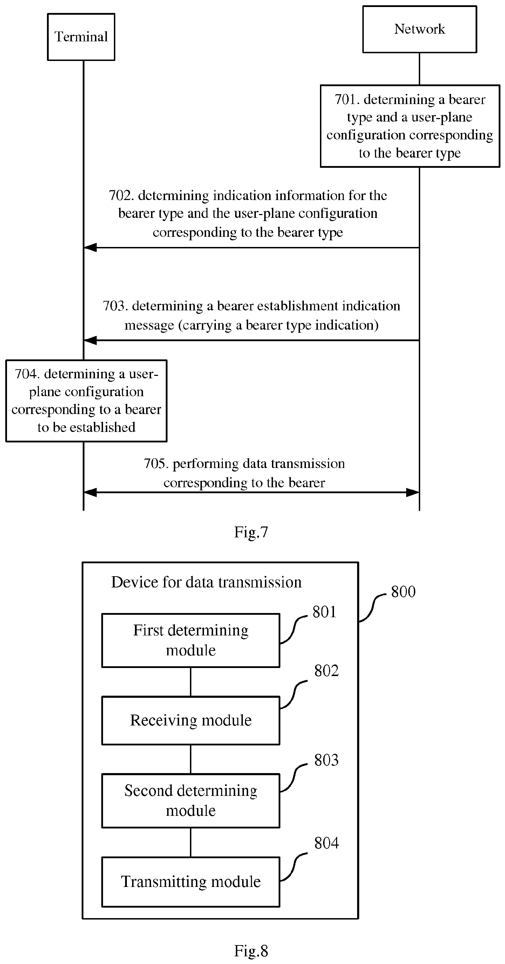

Illustratively, reference is made to Fig.7, which is a schematic diagram of a signaling manner for transmitting a correspondence between bearer types and user-plane configurations corresponding to the bearers, which includes step 701 to step 705.

In step 701, determining a bearer type and a user-plane configuration corresponding to the bearer type.

A network determines the bearer type and the user-plane configuration corresponding to the bearer type. The user-plane configuration corresponding to a bearer includes a user-plane function configuration and/or a user plane parameter configuration. Factors, such as a service type and a network deployment corresponding to a bearer should be taken into account, when the user-plane configuration corresponding to the bearer type is determined.

The user-plane configuration corresponding to the bearer type is a configuration for a basic function and/or parameter of a user plane, or a user-plane configuration corresponding to the bearer type is a set of configurations for basic functions and/or parameters of a user plane, and the user-plane configuration may be changed by the network through a delta configuration on basis of the above bearer type.

Taking a URLLC service as an example, since the URLLC service requires high reliability, low latency and smaller data packets, a bearer user-plane function corresponding to the URLLC service cannot support functions such as ARQ, segmentation and the like, and a user plane parameter, such as TTI (Transmission Time Interval) should be chosen as a shorter TTI.

Taking a user plane protocol stack separation scheme Option 3 as an example (see Fig.2), since there is a non-ideal link between the centralized processing node and the distributed processing node, a certain delay exists, and if a bearer corresponds to the URLLC service, a user-plane function corresponding to the bearer may be considered to not support segmentation and concatenation, thereby avoiding a latency caused by a scheduling interaction between the RLC and MAC (Media Access Control).

In step 702, determining indication information for the bearer type and the user-plane configuration corresponding to the bearer type.

That is to say, after a RRC connection is established between a terminal and the network, the network configures, for the terminal, the indication information for the bearer type and the user-plane configuration corresponding to the bearer type through a dedicated signaling.

As an optimization, if a terminal capability only supports N types of bearers, the network is only required to notify the terminal of a correspondence between the N types of bearers and user-plane configurations corresponding to the N types of bearers.

The correspondence between the bearer types and user-plane configurations may be informed to the terminal, after a RRC connection is established by the terminal; or the correspondence between the bearer types and the user-plane configurations may be informed to the terminal, before the terminal establishes the bearer of the corresponding bearer type. For the latter, the indication information for the bearer type and the user-plane configuration corresponding to the bearer type, and a bearer establishment indication message may use a same message or different messages.

In step 703, determining a bearer establishment indication message.

After the terminal accesses the network, the network determines whether the terminal needs to establish an uplink bearer and/or a downlink bearer. If so, the network transmits the bearer establishment indication message to the terminal, for example, by using a RRC Connection Reconfiguration message. The bearer establishment indication message needs to carry bearer type indication information, such as, a number corresponding to a bearer type. The bearer establishment indication message may further carry an identity of a bearer and some configuration information specialized for the bearer.

The bearer establishment indication message may be a signaling for each protocol layer, such as, a RRC (Radio Resource Control) signaling, a MAC (Media Access Control) signaling, or a physical layer signaling. Of course, for the future mobile communication system, a protocol layer may change and may be no longer called a RRC/MAC/physical layer, and in this case, the bearer establishment indication message may be changed to be a signaling for a protocol layer corresponding to the further mobile communication system.

In step 704, determining a user-plane configuration corresponding to a bearer to be established.

The terminal can determine the user-plane configuration corresponding to the bearer to be established, according to the bearer type indication information obtained in step 702, and the correspondence between bearer types and the user-plane configurations obtained in step 701.

In step 705, performing data transmission corresponding to the bearer.

Data transmission between the terminal and the network is performed according to the user-plane configuration determined in step 703. Taking a downlink as an example, if the user-plane function corresponding to the bearer does not include header compression, a base station is not required to perform a header compression operation when transmitting downlink data corresponding to the bearer. Terminal is not required to perform a decompression operation when receiving the downlink data.

In the embodiment, the network and the terminal perform user plane data transmission based on the user-plane function corresponding to the bearer type. Therefore, it is ensured that the future mobile communication system can perform data transmission management more effectively, signaling overhead for bearer configurations is reduced, and network slicing can be better supported.

Reference is made to Fig.8, which shows a device for data transmission 800. The device includes:
a first determining module 801, configured to determine a correspondence between bearer types and user-plane configurations;
a receiving module 802, configured to receive bearer type indication information indicated by a network side, and the bearer type indication information carrying a bearer type identifier;
a second determining module 803, configured to determine the user-plane configuration corresponding to a bearer to be established, according to the bearer type identifier carried in the bearer type indication information, and the correspondence between the bearer types and the user-plane configurations; and
a transmitting module 804, configured to perform data transmission according to the determined user-plane configuration.

Optionally, the user-plane configuration includes a user-plane function configuration and/or a user plane parameter configuration.

Optionally, the user-plane configuration corresponding to the bearer type is a configuration for a basic function and/or parameter of a user plane, or the user-plane configuration corresponding to the bearer type is a set of configurations for basic functions and/or parameters of a user plane. For example, the set of configurations for the basic functions and/or parameters may be any one or more of: header compression, encryption, integrity protection, segmentation, concatenation, Automatic Repeat reQuest (ARQ), Hybrid Automatic Repeat reQuest (HARQ), multiplexing, a Quality of Service (QoS) parameter, a scheduling manner, a modulation manner, an encoding manner, and a multiple access manner.

Optionally, the user-plane configuration includes function division manners for user-plane functions between a centralized processing node and a distributed processing node.

Optionally, the first determining module is further configured to determine a correspondence between a bearer type of the bearer and a user-plane configuration according to a service type and/or network deployment corresponding to the bearer. Optionally, the first determining module is further configured to determine the correspondence between the bearer types and the user-plane configurations according to pre-configuration information.

Optionally, the first determining module is further configured to determine the correspondence between the bearer types corresponding to a terminal capability and user-plane configurations according to the pre-configuration information.

Optionally, the first determining module is further configured to obtain the correspondence between the bearer types and the user-plane configurations through a network notification manner.

Optionally, the first determining module is further configured to report a terminal capability, and obtain the correspondence between the bearer types corresponding to the terminal capability and the user-plane configurations through a network notification manner.

Optionally, the user-plane configuration corresponding to the bearer type includes one or more of: header compression, encryption, integrity protection, segmentation, concatenation, ARQ, HARQ, multiplexing, a Quality of Service (QoS) parameter, a scheduling manner, a modulation manner, an encoding manner, and a multiple access manner.

In the embodiment, the network and the terminal perform user plane data transmission based on the user-plane function corresponding to the bearer type. Therefore, it is ensured that the future mobile communication system can perform data transmission management more effectively, signaling overhead for bearer configurations is reduced, and network slicing can be better supported.

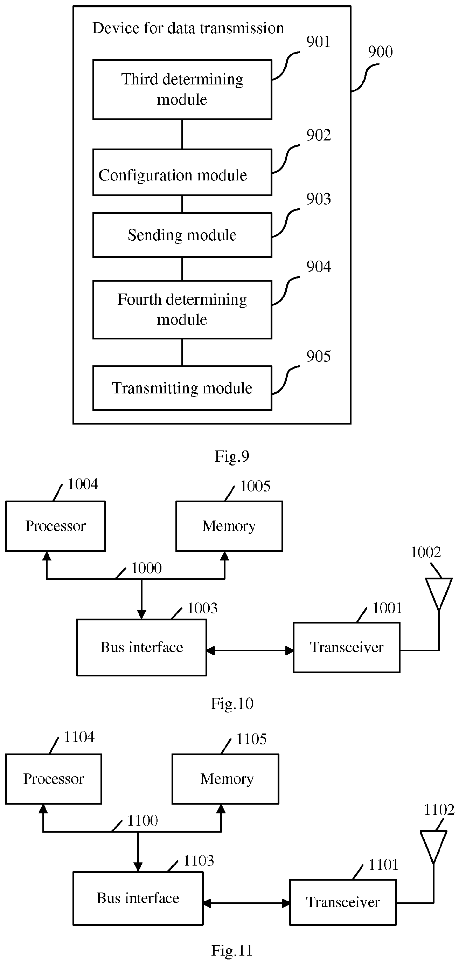

Reference is made to Fig.9, which shows a device for data transmission 900. The device includes:
a third determining module 901, configured to determine a correspondence between bearer types and user-plane configurations;
a configuration module 902, configured to configure a bearer type corresponding to a bearer;
a sending module 903, configured to send bearer type indication information, where a bearer type identity is carried in the bearer type indication information;
a fourth determining module 904, configured to determine the user-plane configuration corresponding to the bearer according to the bearer type identity and the correspondence between the bearer types and the user-plane configurations; and a transmitting module 905, configured to perform data transmission according to the determined user-plane configuration.

Optionally, the user-plane configuration includes a user-plane function configuration and/or a user plane parameter configuration.

Optionally, the user-plane configuration corresponding to the bearer type is a configuration for a basic function and/or parameter of a user plane, or a user-plane configuration corresponding to the bearer type is a configuration set for basic functions and/or parameters of a user plane. For example, the configuration set for the basic functions and/or parameters may be any one or more of: header compression, encryption, integrity protection, segmentation, concatenation, ARQ, HARQ, multiplexing, a QoS parameter, a scheduling manner, a modulation manner, an encoding manner, and a multiple access manner.

Optionally, the user-plane configuration includes function division manners for a user-plane function divided between a centralized processing node and a distributed processing node.

Optionally, the third determining module is further configured to determine a correspondence between the bearer types and the user-plane configurations according to pre-configuration information.

Optionally, the device further includes a notification module, configured to notify a terminal of a correspondence between the bearer types and the user-plane configurations through a network notification manner.

Optionally, the notification module is further configured to obtain a terminal capability reported by the terminal, and obtain a correspondence between the bearer types corresponding to the terminal capability and the user-plane configurations through a network notification manner.

Optionally, the user-plane configuration corresponding to the bearer type includes one or more of: header compression, encryption, integrity protection, segmentation, concatenation, ARQ, HARQ, multiplexing, a QoS parameter, a scheduling manner, a modulation manner, an encoding manner, and a multiple access manner.

Reference is made to Fig.10, which shows a terminal. The terminal includes:
a processor 1004, configured to read a program from a memory 1105 and perform the following processes: determining a correspondence between bearer types and user-plane configurations; receiving bearer type indication information indicated by a network side, the bearer type indication information carrying a bearer type identity;
determining the user-plane configuration corresponding to a bearer, according to the bearer type identity carried in the bearer type indication information and the correspondence between bearer types and the user-plane configurations; and performing data transmission according to the determined user-plane configuration; and
a transceiver 1001, configured to receive and transmit data under the control of the processor 1004.

In Fig. 10, a bus architecture (represented by the bus 1000), the bus 1000 may include any number of interconnected buses and bridges, and the bus 1000 link various circuits together, which include one or more processors represented by the processor 1004 and a memory represented by the memory 1105. The bus 1000 can also link various other circuits, such as peripherals, voltage regulators, and power management circuits, as is known in the art, and therefore, which will not be further described herein. A bus interface 1003 provides an interface between the bus 1000 and the transceiver 1001. The transceiver 1001 may be an element, or may be multiple elements, such as multiple receivers and multiple transmitters, for providing units for communicating with various other devices on a transmission medium. Data processed by the processor 1004 is transmitted over a wireless medium via an antenna 1002. Further, the antenna 1002 also receives data and transmits the data to the processor 1004.

The processor 1004 is responsible for managing the bus 1000 and the usual processing, and can also provide various functions, including timing, peripheral interfaces, voltage regulation, power management, and other control functions. The memory 1105 can be used to store data used by the processor 1004 in performing operations. Optionally, the processor 1004 can be a Central Processing Unit (CPU), an Application Specific Integrated Circuit (ASIC), a Field-Programmable Gate Array (FPGA), or a Complex Programmable Logic Device (CPLD).

The above uplink contention resources available in the area mean that all access devices in an area are reserved as resources for uplink contention transmission. The area is at least an area where the terminal identifier of the active connection state (for example, the Inactive UE ID) is valid, or may be a larger area.

Optionally, the processor 1004 is further configured to determine, a correspondence between a bearer type of the bearer and a user-plane configuration according to the service type and/or network deployment corresponding to the bearer.

Optionally, the processor 1004 is further configured to determine a correspondence between the bearer types and the user-plane configuration according to pre-configuration information.

Optionally, the processor 1004 is further configured to determine the correspondence between the bearer types corresponding to terminal capability and the user-plane configurations according to the pre-configuration information.

Optionally, the processor 1004 is further configured to obtain the correspondence between the bearer types and the user-plane configuration through a network notification manner.

In the embodiment, the network and the terminal perform user plane data transmission based on the user-plane function corresponding to the bearer type. Therefore, it is ensured that the future mobile communication system can perform data transmission management more effectively, signaling overhead for bearer configurations is reduced, and network slicing can be better supported.

Reference is made to Fig.11, which shows a network side device. The device includes a processor 1104 and a transceiver 1101.

The processor 1104 is configured to read a program from a memory 1105 and perform the following processes:
determining a correspondence between bearer types and user-plane configurations;
configuring a bearer type corresponding to a bearer; sending bearer type indication information, the bearer type indication information carrying a bearer type identity;
determining the user-plane configuration corresponding to the bearer according to the bearer type and the correspondence between the bearer types and the user-plane configurations; and performing data transmission according to the determined user-plane configuration.

The transceiver 1101 is configured to receive and transmit data under the control of the processor 1104.

In Fig. 11, a bus architecture (represented by the bus 1100), the bus 1100 may include any number of interconnected buses and bridges, and the bus 1100 link various circuits together, which include one or more processors represented by the processor 1104 and a memory represented by the memory 1105. The bus 1100 can also link various other circuits, such as peripherals, voltage regulators, and power management circuits, as is known in the art, and therefore, which will not be further described herein. A Bus interface 1103 provides an interface between the bus 1100 and the transceiver 1101. The transceiver 1101 may be an element, or may be multiple elements, such as multiple receivers and multiple transmitters, for providing units for communicating with various other devices on a transmission medium. Data processed by the processor 1104 is transmitted over a wireless medium via an antenna 1102. Further, the antenna 1102 also receives data and transmits the data to the processor 1104.

The processor 1104 is responsible for managing the bus 1100 and the usual processing, and can also provide various functions, including timing, peripheral interfaces, voltage regulation, power management, and other control functions. Further, the memory 1105 can be used to store data used by the processor 1104 in performing operations.

Optionally, the processor 1104 can be a Central Processing Unit (CPU), an Application Specific Integrated Circuit (ASIC), a Field-Programmable Gate Array (FPGA), or a Complex Programmable Logic Device (CPLD).

The user-plane configuration includes: a user-plane function configuration and/or a user plane parameter configuration, which is not limited thereto, of course.

The user-plane configuration corresponding to the bearer type is a configuration for a basic function and/or parameter of a user plane, or the user-plane configuration corresponding to the bearer type is a configuration set for basic functions and/or parameters of a user plane, which is not limited thereto, of course.

Optionally, the processor 1104 is further configured to determine the correspondence between the bearer types and the user-plane configurations according to pre-configuration information.

The user-plane configuration corresponding to the bearer type includes one or more of: header compression, encryption, integrity protection, segmentation, concatenation, Automatic Repeat reQuest (ARQ), Hybrid Automatic Repeat reQuest (HARQ), multiplexing, a Quality of Service (QoS) parameter, a scheduling manner, a modulation manner, an encoding manner, and a multiple access manner.

In the embodiment, the network and the terminal perform user plane data transmission based on the user-plane function corresponding to the bearer type. Therefore, it is ensured that the future mobile communication system can perform data transmission management more effectively, signaling overhead for bearer configurations is reduced, and network slicing can be better supported.

It should be understood that, "one embodiment" or "an embodiment" throughout the specification means that specific features, structures, or characteristics relating to an embodiment are included in at least one embodiment of the present disclosure. Therefore, "in one embodiment" or "in an embodiment" appearing throughout the specification does not necessarily mean a same embodiment. In addition, these specific features, structures, or characteristics may be combined in one or more embodiments in any suitable manner.

In various embodiments of the present disclosure, it should be understood that, a size of each serial number in the above processes does not mean an execution order of a respective process, and the execution order of each process should be determined based on functions and internal logic of the processes, and should not be construed as limiting of an implementation process of each embodiment of the present disclosure. Additionally, such terms as "system" and "network" are usually used interchangeably herein.

It should be understood that, a term "and/or" herein merely means the association for describing associated objects, which indicates that there may be three relationships. Taking A and/or B for example, it may indicate following three conditions that A exists alone, both A and B exist simultaneously, or B exists alone. In addition, a character "/" herein generally indicates that there is an "or" relationship between associated objects before the character and after the character.

It should be understood that, in the embodiments provided herein, "B corresponding to A" means that B is associated with A, and B can be determined according to A. However, it should also be understood that, determining B according to A does not mean that B is determined only based on A, but it means that B can also be determined based on A and/or other information.

In several embodiments provided by the present application, it should be understood that, the disclosed method and device may be implemented in other manners. For example, the device embodiments described above are merely illustrative. For example, a division of the unit or module is only a logical function division, while in actual implementation, there may be another division manner, for example, multiple units or components may be combined or can be integrated into another system, or some features can be ignored or not executed. In addition, a coupling or a direct coupling or communication connection between each other shown or discussed may be an indirect coupling or a communication connection through some interfaces, devices or units, and may be electrical, mechanical or otherwise.

In addition, each functional unit in various embodiments of the present disclosure may be integrated into one processing unit, or each unit may be physically included separately, or two or more units may be integrated into one unit. The above integrated unit can be implemented in the form of hardware or in the form of a hardware and software functional units.

The above-described integrated unit implemented in the form of a software functional unit can be stored in a computer readable memory medium. The above software functional unit is stored in a memory medium and includes multiple instructions for causing a computer device (which may be a personal computer, a server, or a network side device, etc.) to perform part of steps of a transceiving method of respective embodiments of the present disclosure. The computer readable memory medium includes a medium in which program codes are stored, such as a U disk, a removable hard disk, a Read-Only Memory (ROM), a Random Access Memory (RAM), a magnetic disk, or an optical disk, and the like.

## Claims

1. A method for data transmission, comprising:
determining (301), by a terminal, a correspondence between bearer types and user-plane configurations;
receiving (302), by the terminal, bearer type indication information indicated by a network side, the bearer type indication information carrying a bearer type identifier;
determining (303), by the terminal, the user-plane configuration corresponding to a bearer, according to the bearer type identifier carried in the bearer type indication information and the correspondence between the bearer types and the user-plane configurations; and
performing (304), by the terminal, data transmission according to the determined user-plane configuration,
wherein the user-plane configurations comprise a user-plane function configuration and/or a user plane parameter configuration; or
the user-plane configurations comprise function division manners for a user-plane function divided between a centralized processing node and a distributed processing node.

2. The method according to claim 1, wherein the user-plane configuration corresponding to the bearer type is a configuration for a basic function and/or a basic parameter of a user plane, or the user-plane configuration corresponding to the bearer type is a set of configurations for the basic functions and/or the basic parameters of the user plane; or
wherein the user-plane configuration corresponding to the bearer type comprises one or more of: header compression, encryption, integrity protection, segmentation, concatenation, Automatic Repeat reQuest, ARQ, Hybrid Automatic Repeat reQuest, HARQ, multiplexing, a Quality of Service, QoS, parameter, a scheduling manner, a modulation manner, an encoding manner, and a multiple access manner.

3. The method according to claim 1, wherein the determining, by the terminal, the correspondence between bearer types and the user-plane configurations comprises:
determining, by the terminal, the correspondence between the bearer type of the bearer and the user-plane configuration according to at least one of a service type corresponding to the bearer or a network deployment corresponding to the bearer.

4. The method according to claim 1, wherein the determining, by the terminal, the correspondence between bearer types and the user-plane configurations comprises:
determining, by the terminal, the correspondence between the bearer types and the user-plane configurations based on pre-configuration information; or
obtaining, by the terminal, the correspondence between the bearer types and the user-plane configurations in a network notification manner.

5. The method according to claim 4, wherein the determining, by the terminal, the correspondence between the bearer types and the user-plane configurations based on the pre-configuration information comprises:
determining, by the terminal, the correspondence between the bearer types corresponding to a terminal capability and the user-plane configurations based on the pre-configuration information, or
wherein the obtaining, by the terminal, the correspondence between the bearer types and the user-plane configurations in the network notification manner comprises:
reporting, by the terminal, a terminal capability; and
obtaining, by the terminal, the correspondence between the bearer types corresponding to the terminal capability and the user-plane configurations in the network notification manner.

6. A method for data transmission, comprising:
determining (401), by a network side device, a correspondence between bearer types and user-plane configurations;
configuring (402), by the network side device, the bearer type corresponding to a bearer;
sending (403), by the network side device, bearer type indication information, wherein a bearer type identity is carried in the bearer type indication information;
determining (404), by the network side device, the user-plane configuration corresponding to the bearer, according to the bearer type identity and the correspondence between the bearer types and the user-plane configurations; and
performing (405), by the network side device, data transmission according to the determined user-plane configuration,
wherein the user-plane configurations comprise a user-plane function configuration and/or a user plane parameter configuration; or
the user-plane configurations comprise function division manners for a user-plane function divided between a centralized processing node and a distributed processing node.

7. The method according to claim 6, wherein the user-plane configuration corresponding to the bearer type is a configuration for a basic function and/or a basic parameter of a user plane, or the user-plane configuration corresponding to the bearer type is a set of configurations for the basic functions and/or the basic parameters of the user plane, and
wherein the user-plane configuration corresponding to the bearer type comprises one or more of: header compression, encryption, integrity protection, segmentation, concatenation, Automatic Repeat reQuest, ARQ, Hybrid Automatic Repeat reQuest, HARQ, multiplexing, a Quality of Service, QoS, parameter, a scheduling manner, a modulation manner, an encoding manner, and a multiple access manner; or
wherein the determining, by the network side device, the correspondence between bearer types and user-plane configurations comprises:
determining, by the network side device, the correspondence between the bearer types and the user-plane configurations based on pre-configuration information.

8. The method according to claim 6, wherein the method further comprises:
notifying, by the network side device, a terminal of the correspondence between the bearer types and the user-plane configurations in a network notification manner, and
wherein the notifying, by the network side device, the terminal of the correspondence between the bearer types and the user-plane configurations in the network notification manner comprises:
obtaining, by the network side device, a terminal capability reported by the terminal; and
notifying, by the network side device, the terminal of the correspondence between the bearer types corresponding to the terminal capability and the user-plane configurations in the network notification manner.

9. A device for data transmission (800), comprising:
a first determining module (801), configured to determine a correspondence between bearer types and user-plane configurations;
a receiving module (802), configured to receive bearer type indication information indicated by a network side, wherein a bearer type identifier is carried in the bearer type indication information;
a second determining module (803), configured to determine the user-plane configuration corresponding to a bearer to be established, according to the bearer type identifier carried in the bearer type indication information, and the correspondence between the bearer types and the user-plane configurations; and
a transmitting module (804), configured to perform data transmission according to the determined user-plane configuration,
wherein the user-plane configurations comprise a user-plane function configuration and/or a user plane parameter configuration; or
the user-plane configurations comprise function division manners for a user-plane function divided between a centralized processing node and a distributed processing node.

10. The device (800) according to claim 9, wherein the user-plane configuration corresponding to the bearer type is a configuration for a basic function and/or a basic parameter of a user plane, or the user-plane configuration corresponding to the bearer type is a set of configurations for the basic functions and/or the basic parameters of the user plane; or
wherein the user-plane configuration corresponding to the bearer type comprises one or more of: header compression, encryption, integrity protection, segmentation, concatenation, Automatic Repeat reQuest, ARQ, Hybrid Automatic Repeat reQuest, HARQ, multiplexing, a Quality of Service, QoS, parameter, a scheduling manner, a modulation manner, an encoding manner, and a multiple access manner.

11. The device (800) according to claim 9, wherein the first determining module (801) is further configured to determine the correspondence between the bearer type of the bearer and the user-plane configuration according to at least one of a service type and a network deployment corresponding to the bearer.

12. The device (800) according to claim 9, wherein the first determining module (801) is further configured to: determine the correspondence between the bearer types and the user-plane configurations based on pre-configuration information, or obtain the correspondence between the bearer types and the user-plane configurations in a network notification manner; and
wherein the first determining module (801) is further configured to:
determine the correspondence between the bearer types corresponding to a terminal capability and the user-plane configurations based on the pre-configuration information; or
report a terminal capability, and obtain the correspondence between the bearer types corresponding to the terminal capability and the user-plane configurations in the network notification manner.

13. A device for data transmission (900), comprising:
a third determining module (901), configured to determine a correspondence between bearer types and user-plane configurations;
a configuration module (902), configured to configure the bearer type corresponding to a bearer;
a sending module (903), configured to send bearer type indication information, wherein a bearer type identity is carried in the bearer type indication information;
a fourth determining module (904), configured to determine the user-plane configuration corresponding to the bearer according to the bearer type identity and the correspondence between the bearer types and the user-plane configurations; and
a transmitting module (905), configured to perform data transmission according to the determined user-plane configuration,
wherein the user-plane configurations comprise a user-plane function configuration and/or a user plane parameter configuration; or
the user-plane configurations comprise function division manners for a user-plane function divided between a centralized processing node and a distributed processing node.

14. The device (900) according to claim 13, wherein the user-plane configuration corresponding to the bearer type is a configuration for a basic function and/or a basic parameter of a user plane, or the user-plane configuration corresponding to the bearer type is a set of configurations for the basic functions and/or the basic parameters of the user plane; or
wherein the user-plane configuration corresponding to the bearer type comprises one or more of: header compression, encryption, integrity protection, segmentation, concatenation, Automatic Repeat reQuest, ARQ, Hybrid Automatic Repeat reQuest, HARQ, multiplexing, a Quality of Service, QoS, parameter, a scheduling manner, a modulation manner, an encoding manner, and a multiple access manner; or
wherein the third determining module (901) is further configured to determine the correspondence between the bearer types and the user-plane configurations based on pre-configuration information.

15. The device (900) according to claim 13, wherein the device further comprises:
a notification module, configured to notify a terminal of the correspondence between the bearer types and the user-plane configurations in a network notification manner,
wherein the notification module is further configured to report a terminal capability, and obtain the correspondence between the bearer types corresponding to the terminal capability and the user-plane configurations through the network notification manner.

## Patentansprüche

1. Verfahren zur Datenübertragung, umfassend:
Bestimmen (301) einer Entsprechung zwischen Trägertypen und Benutzerebenenkonfigurationen durch ein Endgerät;
Empfangen (302) von Trägertyp-Anzeigeinformationen, die von einer Netzwerkseite angezeigt werden, durch das Endgerät, wobei die Trägertyp-Anzeigeinformationen eine Trägertypkennung übermitteln;
Bestimmen (303) der Benutzerebenenkonfiguration, die einem Träger entspricht, durch das Endgerät gemäß der in den Trägertyp-Anzeigeinformationen übermittelten Trägertypkennung und der Entsprechung zwischen den Trägertypen und den Benutzerebenenkonfigurationen und
Durchführen (304) von Datenübertragung durch das Endgerät gemäß der bestimmten Benutzerebenenkonfiguration,
wobei die Benutzerebenenkonfigurationen eine Benutzerebenen-Funktionskonfiguration und/oder eine Benutzerebenen-Parameterkonfiguration umfassen oder
die Benutzerebenenkonfigurationen Funktionsaufteilungsarten für eine Benutzerebenenfunktion, die zwischen einem zentralen Verarbeitungsknoten und einem verteilten Verarbeitungsknoten aufgeteilt ist, umfassen.

2. Verfahren nach Anspruch 1, wobei es sich bei der Benutzerebenenkonfiguration, die dem Trägertyp entspricht, um eine Konfiguration für eine Basisfunktion und/oder einen Basisparameter einer Benutzerebene handelt oder es sich bei der Benutzerebenenkonfiguration, die dem Trägertyp entspricht, um eine Reihe von Konfigurationen für die Basisfunktionen und/oder die Basisparameter der Benutzerebene handelt oder
wobei die Benutzerebenenkonfiguration, die dem Trägertyp entspricht, eines oder mehrere umfasst aus: Headerkomprimierung, Verschlüsselung, Integritätsschutz, Segmentierung, Verkettung, Automatic Repeat reQuest, ARQ, Hybrid Automatic Repeat reQuest, HARQ, Multiplexing, einem Quality of Service-Parameter, QoS-Parameter, einer Planungsart, einer Modulationsart, einer Codierungsart und einer Mehrfachzugriffsart.

3. Verfahren nach Anspruch 1, wobei das Bestimmen der Entsprechung zwischen Trägertypen und den Benutzerebenenkonfigurationen durch das Endgerät umfasst:
Bestimmen der Entsprechung zwischen dem Trägertyp des Trägers und der Benutzerebenenkonfiguration durch das Endgerät gemäß mindestens einem aus einem Diensttyp, der dem Träger entspricht, oder einer Netzwerkbereitstellung, die dem Träger entspricht.

4. Verfahren nach Anspruch 1, wobei das Bestimmen der Entsprechung zwischen Trägertypen und den Benutzerebenenkonfigurationen durch das Endgerät umfasst:
Bestimmen der Entsprechung zwischen den Trägertypen und den Benutzerebenenkonfigurationen durch das Endgerät auf Basis von Vorkonfigurationsinformationen oder
Erhalten der Entsprechung zwischen den Trägertypen und den Benutzerebenenkonfigurationen durch das Endgerät auf eine Netzwerkbenachrichtigungsart.

5. Verfahren nach Anspruch 4, wobei das Bestimmen der Entsprechung zwischen den Trägertypen und den Benutzerebenenkonfigurationen durch das Endgerät auf Basis der Vorkonfigurationsinformationen umfasst:
Bestimmen der Entsprechung zwischen den Trägertypen, die einer Endgerätefähigkeit entsprechen, und den Benutzerebenenkonfigurationen durch das Endgerät auf Basis der Vorkonfigurationsinformationen, oder
wobei das Erhalten der Entsprechung zwischen den Trägertypen und den Benutzerebenenkonfigurationen durch das Endgerät auf die Netzwerkbenachrichtigungsart umfasst:
Melden einer Endgerätefähigkeit durch das Endgerät und
Erhalten der Entsprechung zwischen den Trägertypen, die der Endgerätefähigkeit entsprechen, und den Benutzerebenenkonfigurationen durch das Endgerät auf die Netzwerkbenachrichtigungsart.

6. Verfahren zur Datenübertragung, umfassend:
Bestimmen (401) einer Entsprechung zwischen Trägertypen und Benutzerebenenkonfigurationen durch eine netzwerkseitige Vorrichtung;
Konfigurieren (402) des Trägertyps, der einem Träger entspricht, durch die netzwerkseitige Vorrichtung;
Senden (403) von Trägertyp-Anzeigeinformationen durch die netzwerkseitige Vorrichtung, wobei in den Trägertyp-Anzeigeinformationen eine Trägertypidentität übermittelt wird;
Bestimmen (404) der Benutzerebenenkonfiguration, die dem Träger entspricht, durch die netzwerkseitige Vorrichtung gemäß der Trägertypidentität und der Entsprechung zwischen den Trägertypen und den Benutzerebenenkonfigurationen und
Durchführen (405) von Datenübertragung durch die netzwerkseitige Vorrichtung gemäß der bestimmten Benutzerebenenkonfiguration,
wobei die Benutzerebenenkonfigurationen eine Benutzerebenen-Funktionskonfiguration und/oder eine Benutzerebenen-Parameterkonfiguration umfassen oder
die Benutzerebenenkonfigurationen Funktionsaufteilungsarten für eine Benutzerebenenfunktion, die zwischen einem zentralen Verarbeitungsknoten und einem verteilten Verarbeitungsknoten aufgeteilt ist, umfassen.

7. Verfahren nach Anspruch 6, wobei es sich bei der Benutzerebenenkonfiguration, die dem Trägertyp entspricht, um eine Konfiguration für eine Basisfunktion und/oder einen Basisparameter einer Benutzerebene handelt oder es sich bei der Benutzerebenenkonfiguration, die dem Trägertyp entspricht, um eine Reihe von Konfigurationen für die Basisfunktionen und/oder die Basisparameter der Benutzerebene handelt und
wobei die Benutzerebenenkonfiguration, die dem Trägertyp entspricht, eines oder mehrere umfasst aus: Headerkomprimierung, Verschlüsselung, Integritätsschutz, Segmentierung, Verkettung, Automatic Repeat reQuest, ARQ, Hybrid Automatic Repeat reQuest, HARQ, Multiplexing, einem Quality of Service-Parameter, QoS-Parameter, einer Planungsart, einer Modulationsart, einer Codierungsart und einer Mehrfachzugriffsart; oder
wobei das Bestimmen der Entsprechung zwischen Trägertypen und Benutzerebenenkonfigurationen durch die netzwerkseitige Vorrichtung umfasst:
Bestimmen der Entsprechung zwischen den Trägertypen und den Benutzerebenenkonfigurationen durch die netzwerkseitige Vorrichtung auf Basis von Vorkonfigurationsinformationen.

8. Verfahren nach Anspruch 6, wobei das Verfahren weiter umfasst:
Benachrichtigen eines Endgeräts durch die netzwerkseitige Vorrichtung über die Entsprechung zwischen den Trägertypen und den Benutzerebenenkonfigurationen auf eine Netzwerkbenachrichtigungsart, und
wobei das Benachrichtigen des Endgeräts durch die netzwerkseitige Vorrichtung über die Entsprechung zwischen den Trägertypen und den Benutzerebenenkonfigurationen auf die Netzwerkbenachrichtigungsart umfasst:
Erhalten einer Endgerätefähigkeit, die vom Endgerät gemeldet wird, durch die netzwerkseitige Vorrichtung und
Benachrichtigen des Endgeräts durch die netzwerkseitige Vorrichtung über die Entsprechung zwischen den Trägertypen, die der Endgerätefähigkeit entsprechen, und den Benutzerebenenkonfigurationen auf die Netzwerkbenachrichtigungsart.

9. Vorrichtung zur Datenübertragung (800), umfassend:
ein erstes Bestimmungsmodul (801), das dazu konfiguriert ist, eine Entsprechung zwischen Trägertypen und Benutzerebenenkonfigurationen zu bestimmen;
ein Empfangsmodul (802), das dazu konfiguriert ist, Trägertyp-Anzeigeinformationen, die von einer Netzwerkseite angezeigt werden, zu empfangen, wobei in den Trägertyp-Anzeigeinformationen eine Trägertypkennung übermittelt wird;
ein zweites Bestimmungsmodul (803), das dazu konfiguriert ist, die Benutzerebenenkonfiguration, die einem Träger, der aufgebaut werden soll, entspricht, gemäß der in den Trägertyp-Anzeigeinformationen übermittelten Trägertypkennung und der Entsprechung zwischen den Trägertypen und den Benutzerebenenkonfigurationen zu bestimmen; und
ein Übertragungsmodul (804), das dazu konfiguriert ist, Datenübertragung gemäß der bestimmten Benutzerebenenkonfiguration durchzuführen,
wobei die Benutzerebenenkonfigurationen eine Benutzerebenen-Funktionskonfiguration und/oder eine Benutzerebenen-Parameterkonfiguration umfassen oder
die Benutzerebenenkonfigurationen Funktionsaufteilungsarten für eine Benutzerebenenfunktion, die zwischen einem zentralen Verarbeitungsknoten und einem verteilten Verarbeitungsknoten aufgeteilt ist, umfassen.

10. Vorrichtung (800) nach Anspruch 9, wobei es sich bei der Benutzerebenenkonfiguration, die dem Trägertyp entspricht, um eine Konfiguration für eine Basisfunktion und/oder einen Basisparameter einer Benutzerebene handelt oder es sich bei der Benutzerebenenkonfiguration, die dem Trägertyp entspricht, um eine Reihe von Konfigurationen für die Basisfunktionen und/oder die Basisparameter der Benutzerebene handelt oder
wobei die Benutzerebenenkonfiguration, die dem Trägertyp entspricht, eines oder mehrere umfasst aus: Headerkomprimierung, Verschlüsselung, Integritätsschutz, Segmentierung, Verkettung, Automatic Repeat reQuest, ARQ, Hybrid Automatic Repeat reQuest, HARQ, Multiplexing, einem Quality of Service-Parameter, QoS-Parameter, einer Planungsart, einer Modulationsart, einer Codierungsart und einer Mehrfachzugriffsart.

11. Vorrichtung (800) nach Anspruch 9, wobei das erste Bestimmungsmodul (801) weiter dazu konfiguriert ist, die Entsprechung zwischen dem Trägertyp des Trägers und der Benutzerebenenkonfiguration gemäß mindestens einem aus einem Diensttyp und einer Netzwerkbereitstellung, die dem Träger entspricht, zu bestimmen.

12. Vorrichtung (800) nach Anspruch 9, wobei das erste Bestimmungsmodul (801) weiter dazu konfiguriert ist: die Entsprechung zwischen den Trägertypen und den Benutzerebenenkonfigurationen auf Basis von Vorkonfigurationsinformationen zu bestimmen oder die Entsprechung zwischen den Trägertypen und den Benutzerebenenkonfigurationen auf eine Netzwerkbenachrichtigungsart zu erhalten; und
wobei das erste Bestimmungsmodul (801) weiter dazu konfiguriert ist:
die Entsprechung zwischen den Trägertypen, die einer Endgerätefähigkeit entsprechen, und den Benutzerebenenkonfigurationen auf Basis der Vorkonfigurationsinformationen zu bestimmen oder
eine Endgerätefähigkeit zu melden und die Entsprechung zwischen den Trägertypen, die der Endgerätefähigkeit entsprechen, und den Benutzerebenenkonfigurationen auf die Netzwerkbenachrichtigungsart zu erhalten.

13. Vorrichtung zur Datenübertragung (900), umfassend:
ein drittes Bestimmungsmodul (901), das dazu konfiguriert ist, eine Entsprechung zwischen Trägertypen und Benutzerebenenkonfigurationen zu bestimmen;
ein Konfigurationsmodul (902), das dazu konfiguriert ist, den Trägertyp, der einem Träger entspricht, zu konfigurieren;
ein Sendemodul (903), das dazu konfiguriert ist, Trägertyp-Anzeigeinformationen zu senden, wobei in den Trägertyp-Anzeigeinformationen eine Trägertypidentität übermittelt wird;
ein viertes Bestimmungsmodul (904), das dazu konfiguriert ist, die Benutzerebenenkonfiguration, die dem Träger entspricht, gemäß der Trägertypidentität und der Entsprechung zwischen den Trägertypen und den Benutzerebenenkonfigurationen zu bestimmen; und
ein Übertragungsmodul (905), das dazu konfiguriert ist, Datenübertragung gemäß der bestimmten Benutzerebenenkonfiguration durchzuführen,
wobei die Benutzerebenenkonfigurationen eine Benutzerebenen-Funktionskonfiguration und/oder eine Benutzerebenen-Parameterkonfiguration umfassen oder
die Benutzerebenenkonfigurationen Funktionsaufteilungsarten für eine Benutzerebenenfunktion, die zwischen einem zentralen Verarbeitungsknoten und einem verteilten Verarbeitungsknoten aufgeteilt ist, umfassen.

14. Vorrichtung (900) nach Anspruch 13, wobei es sich bei der Benutzerebenenkonfiguration, die dem Trägertyp entspricht, um eine Konfiguration für eine Basisfunktion und/oder einen Basisparameter einer Benutzerebene handelt oder es sich bei der Benutzerebenenkonfiguration, die dem Trägertyp entspricht, um eine Reihe von Konfigurationen für die Basisfunktionen und/oder die Basisparameter der Benutzerebene handelt oder
wobei die Benutzerebenenkonfiguration, die dem Trägertyp entspricht, eines oder mehrere umfasst aus: Headerkomprimierung, Verschlüsselung, Integritätsschutz, Segmentierung, Verkettung, Automatic Repeat reQuest, ARQ, Hybrid Automatic Repeat reQuest, HARQ, Multiplexing, einem Quality of Service-Parameter, QoS-Parameter, einer Planungsart, einer Modulationsart, einer Codierungsart und einer Mehrfachzugriffsart; oder
wobei das dritte Bestimmungsmodul (901) weiter dazu konfiguriert ist, die Entsprechung zwischen den Trägertypen und den Benutzerebenenkonfigurationen auf Basis von Vorkonfigurationsinformationen zu bestimmen.

15. Vorrichtung (900) nach Anspruch 13, wobei die Vorrichtung weiter umfasst:
ein Benachrichtigungsmodul, das dazu konfiguriert ist, ein Endgerät auf eine Netzwerkbenachrichtigungsart über die Entsprechung zwischen den Trägertypen und den Benutzerebenenkonfigurationen zu benachrichtigen,
wobei das Benachrichtigungsmodul weiter dazu konfiguriert ist, eine Endgerätefähigkeit zu melden und die Entsprechung zwischen den Trägertypen, die der Endgerätefähigkeit entsprechen, und den Benutzerebenenkonfigurationen über die Netzwerkbenachrichtigungsart zu erhalten.

## Revendications

1. Procédé de transmission de données comprenant :
la détermination (301), par un terminal, d'une correspondance entre des types de support et des configurations de plan utilisateur ;
la réception (302), par le terminal, d'informations d'indication de type de support indiquées par un côté réseau, les informations d'indication de type de support transportant un identificateur de type de support ;
la détermination (303), par le terminal, de la configuration de plan utilisateur correspondant à un support, en fonction de l'identificateur de type de support transporté dans les informations d'indication de type de support et la correspondance entre les types de support et les configurations de plan utilisateur ; et
l'exécution (304), par le terminal, d'une transmission de données en fonction de la configuration de plan utilisateur déterminée,
dans lequel les configurations de plan utilisateur comprennent une configuration de fonction de plan utilisateur et/ou une configuration de paramètre de plan utilisateur ; ou
les configurations de plan utilisateur comprennent des manières de division de fonction pour une fonction de plan utilisateur divisée entre un nœud de traitement centralisé et un nœud de traitement distribué.

2. Procédé selon la revendication 1, dans lequel la configuration de plan utilisateur correspondant au type de support est une configuration pour une fonction de base et/ou un paramètre de base d'un plan utilisateur, ou la configuration de plan utilisateur correspondant au type de support est un ensemble de configurations pour les fonctions de base et/ou les paramètres de base du plan utilisateur ; ou
dans lequel la configuration de plan utilisateur correspondant au type de support comprend un ou plusieurs parmi : une compression d'en-tête, un chiffrement, une protection d'intégrité, une segmentation, une concaténation, une demande de répétition automatique, ARQ, une demande de répétition automatique hybride, HARQ, un multiplexage, un paramètre de qualité de service, QoS, une manière de planification, une manière de modulation, une manière de codage et une manière d'accès multiple.

3. Procédé selon la revendication 1, dans lequel la détermination, par le terminal, de la correspondance entre des types de support et les configurations de plan utilisateur comprend :
la détermination, par le terminal, de la correspondance entre le type de support du support et la configuration de plan utilisateur en fonction d'au moins un parmi un type de service correspondant au support ou un déploiement de réseau correspondant au support.

4. Procédé selon la revendication 1, dans lequel la détermination, par le terminal, de la correspondance entre des types de support et les configurations de plan utilisateur comprend :
la détermination, par le terminal, de la correspondance entre les types de support et les configurations de plan utilisateur sur la base d'informations de pré-configuration ; ou
l'obtention, par le terminal, de la correspondance entre les types de support et les configurations de plan utilisateur par le biais d'une notification réseau.

5. Procédé selon la revendication 4, dans lequel la détermination, par le terminal, de la correspondance entre les types de support et les configurations de plan utilisateur sur la base des informations de pré-configuration comprend :
la détermination, par le terminal, de la correspondance entre les types de support correspondant à une capacité de terminal et les configurations de plan utilisateur sur la base d'informations de pré-configuration, ou
dans lequel l'obtention, par le terminal, de la correspondance entre les types de support et les configurations de plan utilisateur par le biais de la notification réseau comprend :
le rapport, par le terminal, d'une capacité de terminal ; et
l'obtention, par le terminal, de la correspondance entre les types de support correspondant à la capacité de terminal et les configurations de plan utilisateur par le biais de la notification réseau.

6. Procédé de transmission de données comprenant :
la détermination (401), par un dispositif côté réseau, d'une correspondance entre des types de support et des configurations de plan utilisateur ;
la configuration (402), par le dispositif côté réseau, du type de support correspondant à un support ;
l'envoi (403), par le dispositif côté réseau, d'informations d'indication de type de support, dans lequel une identité de type de support est transportée dans les informations d'indication de type de support :
la détermination (404), par le dispositif côté réseau, de la configuration de plan utilisateur correspondant au support, en fonction de l'identité de type de support et la correspondance entre les types de support et les configurations de plan utilisateur ; et
l'exécution (405), par le dispositif côté réseau, d'une transmission de données en fonction de la configuration de plan utilisateur déterminée,
dans lequel les configurations de plan utilisateur comprennent une configuration de fonction de plan utilisateur et/ou une configuration de paramètre de plan utilisateur ; ou
les configurations de plan utilisateur comprennent des manières de division de fonction pour une fonction de plan utilisateur divisée entre un nœud de traitement centralisé et un nœud de traitement distribué.

7. Procédé selon la revendication 6, dans lequel la configuration de plan utilisateur correspondant au type de support est une configuration pour une fonction de base et/ou un paramètre de base d'un plan utilisateur, ou la configuration de plan utilisateur correspondant au type de support est un ensemble de configurations pour les fonctions de base et/ou les paramètres de base du plan utilisateur, et
dans lequel la configuration de plan utilisateur correspondant au type de support comprend un ou plusieurs parmi : une compression d'en-tête, un chiffrement, une protection d'intégrité, une segmentation, une concaténation, une demande de répétition automatique, ARQ, une demande de répétition automatique hybride, HARQ, un multiplexage, un paramètre de qualité de service, QoS, une manière de planification, une manière de modulation, une manière de codage et une manière d'accès multiple ; ou
dans lequel la détermination, par le dispositif côté réseau, de la correspondance entre les types de support et les configurations de plan utilisateur comprend :
la détermination, par le dispositif côté réseau, de la correspondance entre les types de support et les configurations de plan utilisateur sur la base d'informations de pré-configuration.

8. Procédé selon la revendication 6, dans lequel le procédé comprend en outre :
la notification, par le dispositif côté réseau, à un terminal de la correspondance entre les types de support et les configurations de plan utilisateur par le biais d'une notification réseau, et
dans lequel la notification, par le dispositif côté réseau, au terminal de la correspondance entre les types de support et les configurations de plan utilisateur par le biais de la notification réseau comprend :
l'obtention, par le dispositif côté réseau, d'une capacité de terminal rapportée par le terminal ; et
la notification, par le dispositif côté réseau, au terminal de la correspondance entre les types de support correspondant à la capacité de terminal et les configurations de plan utilisateur de la manière par notification réseau.

9. Dispositif de transmission de données (800) comprenant :
un premier module de détermination (801) configuré pour déterminer une correspondance entre des types de support et des configurations de plan utilisateur ;
un module de réception (802) configuré pour recevoir des informations d'indication de type de support indiquées par un côté réseau, dans lequel un identificateur de type de support est transporté dans les informations d'indication de type de support ;
un deuxième module de détermination (803) configuré pour déterminer la configuration de plan utilisateur correspondant à un support à établir, en fonction de l'identificateur de type de support transporté dans les informations d'indication de type de support et la correspondance entre les types de support et les configurations de plan utilisateur ; et
un module de transmission (804) configuré pour effectuer une transmission de données en fonction de la configuration de plan utilisateur déterminée,
dans lequel les configurations de plan utilisateur comprennent une configuration de fonction de plan utilisateur et/ou une configuration de paramètre de plan utilisateur ; ou
les configurations de plan utilisateur comprennent des manières de division de fonction pour une fonction de plan utilisateur divisée entre un nœud de traitement centralisé et un nœud de traitement distribué.

10. Dispositif (800) selon la revendication 9, dans lequel la configuration de plan utilisateur correspondant au type de support est une configuration pour une fonction de base et/ou un paramètre de base d'un plan utilisateur, ou la configuration de plan utilisateur correspondant au type de support est un ensemble de configurations pour les fonctions de base et/ou les paramètres de base du plan utilisateur ; ou
dans lequel la configuration de plan utilisateur correspondant au type de support comprend un ou plusieurs parmi : une compression d'en-tête, un chiffrement, une protection d'intégrité, une segmentation, une concaténation, une demande de répétition automatique, ARQ, une demande de répétition automatique hybride, HARQ, un multiplexage, un paramètre de qualité de service, QoS, une manière de planification, une manière de modulation, une manière de codage et une manière d'accès multiple.

11. Dispositif (800) selon la revendication 9, dans lequel le premier module de détermination (801) est en outre configuré pour déterminer la correspondance entre le type de support du support et la configuration de plan utilisateur en fonction d'au moins un parmi un type de service et un déploiement de réseau correspondant au support.

12. Dispositif (800) selon la revendication 9, dans lequel le premier module de détermination (801) est en outre configuré pour : déterminer la correspondance entre les types de support et les configurations de plan utilisateur sur la base d'informations de pré-configuration, ou obtenir la correspondance entre les types de support et les configurations de plan utilisateur par le biais d'une notification réseau ; et
dans lequel le premier module de détermination (801) est en outre configuré pour :
déterminer la correspondance entre les types de support correspondant à une capacité de terminal et les configurations de plan utilisateur sur la base des informations de pré-configuration ; ou
rapporter une capacité de terminal et obtenir la correspondance entre les types de support correspondant à la capacité de terminal et les configurations de plan utilisateur par le biais de la notification réseau.

13. Dispositif de transmission de données (900) comprenant :
un troisième module de détermination (901) configuré pour déterminer une correspondance entre des types de support et des configurations de plan utilisateur ;
un module de configuration (902) configuré pour configurer le type de support correspondant à un support ;
un module d'envoi (903) configuré pour envoyer des informations d'indication de type de support, dans lequel une identité de type de support est transportée dans les informations d'indication de type de support :
un quatrième module de détermination (904) configuré pour déterminer la configuration de plan utilisateur correspondant au support, en fonction de l'identité de type de support et la correspondance entre les types de support et les configurations de plan utilisateur ; et
un module de transmission (905) configuré pour effectuer une transmission de données en fonction de la configuration de plan utilisateur déterminée,
dans lequel les configurations de plan utilisateur comprennent une configuration de fonction de plan utilisateur et/ou une configuration de paramètre de plan utilisateur ; ou
les configurations de plan utilisateur comprennent des manières de division de fonction pour une fonction de plan utilisateur divisée entre un nœud de traitement centralisé et un nœud de traitement distribué.

14. Dispositif (900) selon la revendication 13, dans lequel la configuration de plan utilisateur correspondant au type de support est une configuration pour une fonction de base et/ou un paramètre de base d'un plan utilisateur, ou la configuration de plan utilisateur correspondant au type de support est un ensemble de configurations pour les fonctions de base et/ou les paramètres de base du plan utilisateur ; ou
dans lequel la configuration de plan utilisateur correspondant au type de support comprend un ou plusieurs parmi : une compression d'en-tête, un chiffrement, une protection d'intégrité, une segmentation, une concaténation, une demande de répétition automatique, ARQ, une demande de répétition automatique hybride, HARQ, un multiplexage, un paramètre de qualité de service, QoS, une manière de planification, une manière de modulation, une manière de codage et une manière d'accès multiple ; ou
dans lequel le troisième module de détermination (901) est en outre configuré pour déterminer la correspondance entre les types de support et les configurations de plan utilisateur sur la base d'informations de pré-configuration.

15. Dispositif (900) selon la revendication 13, dans lequel le dispositif comprend en outre :
un module de notification configuré pour notifier à un terminal la correspondance entre les types de support et les configurations de plan utilisateur par le biais d'une notification réseau,
dans lequel le module de notification est en outre configuré pour rapporter une capacité de terminal et obtenir la correspondance entre les types de support correspondant à la capacité de terminal et les configurations de plan utilisateur par le biais de la notification réseau.
